# EUROPÄISCHE PATENTANMELDUNG

(11) **EP 2 679 963 A2**
(43) Veröffentlichungstag der Anmeldung: **01.01.2014**
(21) Anmeldenummer: 13003213.9
(22) Anmeldetag: 24.06.2013
(51) Int. Cl.: G01D 11/24

(54) **Messvorrichtung zum Bestimmen einer Prozessgröße**

(30) Priorität: 26.06.2012 DE 102012012528
(71) Anmelder: KROHNE Analytics GmbH und Dr. Wolfgang Babel, 47058 Duisburg (DE)
(72) Erfinder: Babel, Christiane, 71263 Weil der Stadt (DE)
(74) Vertreter: Gesthuysen Patent- und Rechtsanwälte

(57) **Zusammenfassung**

Beschrieben und dargestellt ist eine Messvorrichtung (1) zum Bestimmen einer Prozessgröße mit einem Sensorelement (2) und mit einer Hülse (10), wobei eine Innenwandung der Hülse (10) zwei Vertiefungen (11, 12) aufweist und die Hülse (10) im Bereich der zwei Vertiefungen (11, 12) einen Raum umschließt.

Der Erfindung liegt die Aufgabe zugrunde, eine Messvorrichtung vorzuschlagen, die insbesondere für das Vergießen eines Innenraums optimiert ist.

Die Aufgabe wird bei der in Rede stehenden Messvorrichtung dadurch gelöst, dass die zwei Vertiefungen (11, 12) unterschiedliche Querschnittsflächen umgrenzen.

## Beschreibung

Die Erfindung betrifft eine Messvorrichtung zum Bestimmen mindestens einer Prozessgröße mit mindestens einem Sensorelement zum Messen der Prozessgröße und mit mindestens einer das Sensorelement zumindest teilweise umfassenden Hülse. Dabei weist eine Innenwandung der Hülse mindestens zwei Vertiefungen auf und umschließt die Hülse zumindest im Bereich der mindestens zwei Vertiefungen mindestens einen Raum.

In der modernen Prozess- und Automatisierungstechnik werden zum Überwachen und Bestimmen von Prozessgrößen Messvorrichtungen verwendet, die eine von der zu messenden Prozessgröße abhängige Messgröße generieren. Bei der Messgröße handelt es sich im Allgemeinen um ein elektrisches Signal, das der Auswertung und Weiterverarbeitung zugänglich ist. Bei den Prozessgrößen handelt es sich beispielsweise um den Durchfluss, den pH-Wert, den Füllstand oder die Temperatur eines Mediums.

Solche Messvorrichtungen des Standes der Technik verfügen im Allgemeinen zumindest über ein Sensorelement, das zumeist mit einem Prozessmedium in Kontakt bzw. in Wechselwirkung tritt, und über eine nachgeordnete Elektronik, die ggf. die Messung der Sensoreinheit steuert oder die Messsignale der Sensoreinheit auswertet oder weiterverarbeitet. Als Teil der Elektronik ist in der Regel zumindest eine Leiterplatte vorgesehen, die die jeweils erforderlichen Bauteile trägt. Dabei kann es sich um steife oder auch flexible Leiterplatten handeln. Unter Leiterplatten seien dabei allgemein Träger von elektronischen Bauteilen verstanden.

Unterschiedliche Ausgestaltungen von Messvorrichtungen und Sensorgehäusen lassen sich beispielsweise der Offenlegungsschrift DE 10 2008 043 169 A1, den Gebrauchsmusterschriften DE 20 2007 012 370 U1, DE 20 2005 013 344 U1 und DE 20 2009 008 971 U1 oder den Patentschriften DE 10 2006 061 644 B3 und DE 42 34 133 C2 entnehmen.

Für den Aufbau der Messvorrichtung wird bevorzugt eine modulare Bauweise verwendet, so dass bei der Fertigung nach dem Baukastenprinzip für unterschiedlich ausgestaltete oder dimensionierte Messvorrichtungen auf die gleichen Komponenten bzw. Module zurückgegriffen werden kann. Dabei sind ggf. auch Abschnitte eines die Komponenten umgebenden Gehäuses auf der Innenseite mit einer Metallisierung zur Abschirmung versehen (siehe beispielsweise die Offenlegungsschrift DE 10 2010 039 063 A1).

Um Dichtigkeitsprobleme zu vermeiden und um Isolationen zu erzeugen, sind die Vorrichtungen üblicherweise mit einer Vergussmasse vergossen (siehe z. B. die Offenlegungsschriften DE 10 2007 008 074 A1 oder DE 10 2009 060 872 A1). Das Vergießen ist mit bekannten Problemen verbunden. So sind nicht nur Zugänge für den Verguss, sondern auch Entweichungsmöglichkeiten für die Luft erforderlich. Die Anordnung der Bauteile muss es insbesondere ermöglichen, dass der Verguss in die zu schließenden Hohlräume eindringen kann. Weiterhin kann der Vorgang in Abhängigkeit von der Viskosität des Vergussmaterials sehr lange dauern. Zudem kann es entweder infolge des Fließen des Vergusses beim Vergießen selbst bzw. beim bereits vergossenen Messgerät infolge von temperaturabhängigen Ausdehnungsbewegungen des Vergusses dazu kommen, dass Bauteile oder Komponenten oder auch ganze Leiterplatten bewegt oder verschoben werden.

Eine Messvorrichtung zur Messung des Drucks mit einem vergossenen Gehäuse zeigt beispielsweise die Offenlegungsschrift DE 10 2008 043 169 A1.

Der Erfindung liegt daher die Aufgabe zugrunde, eine Messvorrichtung vorzuschlagen, die insbesondere für das Vergießen eines Innenraums optimiert ist.

Die aufgezeigte Aufgabe ist erfindungsgemäß zunächst und im Wesentlichen bei der in Rede stehenden Messvorrichtung dadurch gelöst, dass die mindestens zwei Vertiefungen unterschiedliche Querschnittsflächen umgrenzen.

In einer Ausgestaltung ist die mindestens eine Hülse in einem Gehäuse angeordnet bzw. bildet zumindest teilweise ein Gehäuse, das zumindest teilweise das Sensorelement umfasst.

Die - in einer Ausgestaltung insbesondere rotationssymmetrisch oder insbesondere hohlzylindrisch ausgestaltete - Hülse weist an ihrer Innenwandung mindestens zwei Vertiefungen auf und umfasst das Sensorelement zumindest teilweise. Oder umgekehrt: das Sensorelement ist zumindest teilweise in der Hülse angeordnet.

Dabei umschließt die Hülse zumindest im Bereich der mindestens zwei Vertiefungen mindestens einen (Innen-)Raum. Insbesondere zwischen der Hülse und dem Sensorelement befindet sich zumindest ein - ggf. auch in mindestens zwei Teilräume unterteilter - Raum, durch den insbesondere der Verguss eingebracht werden kann, z. B. über eine Kanüle, und durch welchen die Luft während des Vergießens entweichen kann. Nach dem Vergießen ist auch dieser Zwischenraum vorzugsweise mit Verguss gefüllt. In einer Ausgestaltung berühren sich die Hülse und das Sensorelement abschnittsweise bzw. wird das Sensorelement durch Bereiche der Hülse in seiner Position gehalten.

Um die angesprochene Kanüle einführen zu können und um gleichzeitig den Raum für die entweichende Luft nicht zu groß zu gestalten, umgrenzen erfindungsgemäß die mindestens zwei Vertiefungen unterschiedliche Querschnittsflächen, wobei in einer Ausgestaltung die - mindestens eine - kleinere Querschnittsfläche dem Entweichen der Luft und die - mindestens eine oder maximal eine - größere Querschnittsfläche dem Einbringen des Vergusses dienen. Eine größere Einbringfläche für den Verguss hat dabei den Vorteil, dass so die Zeit des Vergießens verringert bzw. dass ein Verguss mit einer höheren Viskosität verwendbar ist.

In einer weiteren Ausgestaltung sind noch zusätzliche Vertiefungen für die Luft bzw. den Verguss vorgesehen.

Dabei ist in einer Ausgestaltung mit mehreren - also mindestens zwei - Vertiefungen in der Innenwandung der Hülse vorgesehen, dass die Vertiefungen im Wesentlichen teil- und in einer weiteren Ausgestaltung sogar halbkreisförmige Querschnittsflächen umgrenzen. Die Radien von mindestens zwei Vertiefungen unterscheiden sich dabei voneinander.

In einer Ausgestaltung ist vor allem vorgesehen, dass mehrere Vertiefungen teilkreisförmige Querschnittsflächen mit einem im Wesentlichen gleichen kleineren Radius umgrenzen und dass eine Vertiefung eine teilkreisförmige Querschnittsfläche mit einem größeren Radius umgrenzt. Ergänzend haben in einer Ausgestaltung mehrere Vertiefungen besagten größeren Radius.

Allgemein sind die Vertiefungen beispielsweise zumindest abschnittsweise in Form von Nuten ausgeführt, die in einer Ausgestaltung insbesondere im Wesentlich axial parallel zu einer Längsachse der Hülse verlaufen.

In einer Ausgestaltung ist insgesamt wenigstens ein Ende der Hülse - beispielweise das der Sensoreinheit zugewandte Ende - im Wesentlichen rosettenförmig ausgestaltet. Die Querschnittsflächen seien dabei generell jeweils senkrecht zu einer Längsachse der Hülse betrachtet.

In einer Ausgestaltung schließt sich an die Vertiefungen axial eine größere Freimachung an oder ist mittig zwischen den Enden der Vertiefungen eine solche Freimachung vorgesehen.

Unabhängig von der speziellen Ausgestaltung sind die Vertiefungen generell vom von der Leiterplatte abgewandten Ende der Hülse her zugänglich. Dabei ist ggf. am Rand zunächst ein Absatz oder eine Fase vorgesehen.

Eine Ausgestaltung besteht darin, dass mindestens eine Leiterplatte vorgesehen ist, dass mindestens ein im Wesentlichen als zylindrischer Stift ausgestaltetes Halteelement vorgesehen ist, dass das Halteelement an einem Ende eine Aussparung zur Aufnahme eines Abschnitts der Leiterplatte aufweist, und dass die Leiterplatte zwischen dem Sensorelement und dem Halteelement fixiert ist. Die Leiterplatte wird in dieser Ausgestaltung durch ein Halteelement, insbesondere in Form eines zylindrischen Stifts gehalten und dadurch vorzugsweise auch gegenüber dem Sensorelement eingespannt. Der Querschnitt des in einer Variante als zylindrischer Stift ausgestalteten Halteelements ist dabei in einer Ausgestaltung kreisförmig und bei einer alternativen Variante mehreckig. Die Aussparung zur Fixierung der Leiterplatte ist dabei in einer Variante eine Nut im Halteelement, deren Breite zumindest gleich der Stärke der Leiterplatte an dem Ort ist, der in die Aussparung eingebracht wird. In einer alternativen oder ergänzenden Ausgestaltung verfügt die Leiterplatte über eine Aussparung, in die das Halteelement eingebracht ist. Haben sowohl das Halteelement als auch die Leiterplatte Aussparungen, so ergibt sich dadurch eine weitere Sicherung gegenüber einem Kippen der Leiterplatte im Messgerät. Das Halteelement wird in einer Ausgestaltung mit seinem von der Leiterplatte abgewandten Ende in einer Komponente aufgenommen, die wiederum der Fixierung und Befestigung und somit dem Halten des Halteelements dient.

In einer Ausgestaltung bilden die Hülse und die Leiterplatte - insbesondere nach dem Vergießen - eine kompakte Einheit, die bei der Montage der Messvorrichtung mit den anderen Komponenten und dabei insbesondere mit der Sensoreinheit passend verbunden wird.

Gemäß einer bevorzugten Ausgestaltung der Erfindung weist die Leiterplatte im Eingriffbereich mit dem Halteelement eine Gegenausnehmung auf, so dass die Leiterplatte und das Halteelement ineinandergreifen; dadurch wird bewirkt, dass das Halteelement die Leiterplatte praktisch in drei Raumrichtungen fixiert.

Gemäß einer Ausgestaltung ist mindestens ein Gehäuse vorgesehen, das zumindest die Leiterplatte, das Halteelement und das Sensorelement zumindest teilweise umfasst. Das Sensorelement ragt beispielsweise teilweise aus dem Gehäuse heraus bzw. steht in Verbindung mit einem Fenster innerhalb des Gehäuses. In einer Ausgestaltung werden die Leiterplatte und das Halteelement vollständig vom Gehäuse umschlossen. Dabei ist in einer Ausgestaltung an der Innenwandung des Gehäuses eine Metallisierung für eine elektromagnetische Abschirmung vorgesehen.

In einer Ausgestaltung dient das Sensorelement zum Messen des pH-Werts und/oder des Chlorgehalts und/oder des Sauerstoffgehalts und/oder der elektrischen Leitfähigkeit und/oder der Desinfektionsparameter und/oder der Trübung. Alternative Prozessgrößen sind beispielsweise Durchfluss, Temperatur, Sauerstoffgehalt, Chlorgehalt, Redoxpotential oder Füllstand.

In einer ergänzenden Ausgestaltung, die teilweise in Verbindung mit einzelnen der zuvor genannten Ausgestaltungen zu realisieren ist - und die sich ganz allgemein bezieht auf eine Messvorrichtung zum Bestimmen mindestens einer Prozessgröße mit mindestens einem Sensorelement zum Messen der Prozessgröße und mit mindestens einer Leiterplatte, wobei das Sensorelement mit der Leiterplatte und/oder mit mindestens einem auf der Leiterplatte angeordneten Bauteil direkt oder indirekt verbunden ist -, ist mindestens eine Steckerseele - insbesondere an dem dem Sensorelement gegenüberliegenden Ende der Messvorrichtung - vorgesehen. Die Steckerseele führt dabei mindestens einen elektrischen Kontakt oder mehrere elektrische Kontakte - beispielsweise in Form von Drähten - und dient damit der Zuleitung bzw. Ableitung von Signalen oder elektrischer Energie bzw. ermöglicht allgemein den Anschluss der Messvorrichtung an die messtechnische Umgebung. Mindestens einer der in der Seele geführten Kontakte steht mit der vom Sensorelement abgewandten Seite der Leiterplatte in Kontakt (beispielsweise über mindestens eine Lötverbindung) und fixiert daher die Leiterplatte, die entsprechend geometrisch abgestimmt und ausgestaltet ist. In dieser Ausgestaltung kann daher auf das Halteelement verzichtet werden. Hierfür ist auch Rücksicht auf die weitere Geometrie der Messvorrichtung zu nehmen bzw. ist diese entsprechend anzupassen. Daher ist diese Ausgestaltung auch ggf. vorzugsweise in Verbindung nur mit der teilweise rosettenförmigen Hülse zu sehen.

Im Einzelnen gibt es eine Vielzahl von Möglichkeiten, die erfindungsgemäße Messvorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische, im Wesentlichen die funktionalen Wirkzusammenhänge verdeutlichende Darstellung einer Messvorrichtung im Schnitt,
- Fig. 2: eine räumliche Darstellung des Halteelements der Messvorrichtung der Fig. 1,
- Fig. 3: eine Draufsicht auf das dem Prozess zugewandte Ende der Hülse der Messvorrichtung der Fig. 1,
- Fig. 4: einen Schnitt durch die Hülse der Fig. 3,
- Fig. 5: ein Blick auf eine räumliche Darstellung der Hülse der Fign. 3 und 4 und
- Fig. 6: eine schematische Darstellung einer alternativen Ausgestaltung einer Messvorrichtung im Schnitt.

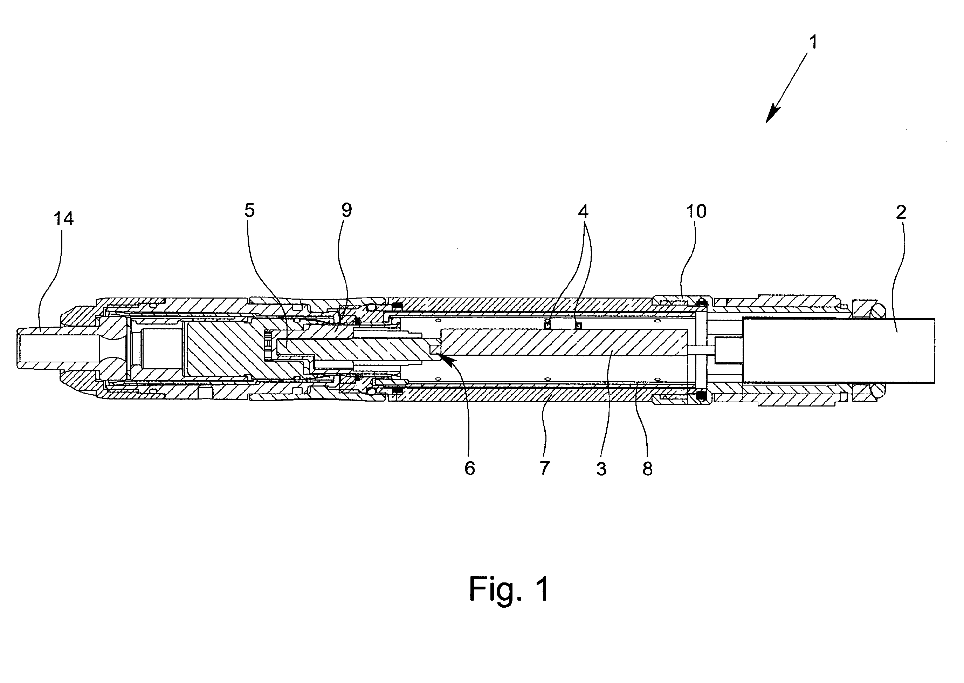

In der Fig. 1 ist ein Schnitt durch eine erfindungsgemäße Messvorrichtung 1 dargestellt, wobei die Vorrichtung 1 insbesondere in dem gezeigten Beispiel zur Messung des pH-Werts dient. Dafür ist ein Sensorelement 2 entsprechend als Glaskörper oder alternativ aus einem Kunststoff ausgeführt. An das Sensorelement 2 grenzt eine Leiterplatte 3 an, auf der sich die für die Verarbeitung der Signale des Sensorelements 2 bzw. für dessen Steuerung erforderlichen Bauteile 4 befinden.

Für den Vorgang des Vergießens und für das Halten der Leiterplatte 3 ist das Halteelement 5 vorgesehen, das insbesondere im Wesentlichen als kreiszylindrischer Stift oder Stab ausgestaltet ist. Die Leiterplatte 3 ruht dabei mit einem Ende (das vorzugsweise ebenfalls entsprechend für die Verbindung mit dem Halteelement 5 ausgestaltet, z. B. ausgedünnt ist) in einer Aussparung 6 in Form einer Nut im Endbereich des Halteelements 5. Das Halteelement 5 hat dabei auch den Vorteil, dass keine weitere Hülse, die ggf. der Halterung der Leiterplatte 3 dienen könnte, zwingend erforderlich ist, sondern dass die Leiterplatte 3 sich ohne weitere Umhüllung direkt im Gehäuse 7 befinden kann. Für eine elektromagnetische Abschirmung ist lediglich die Innenwandung des Gehäuses 7 mit einer Metallisierung 8 versehen.

Dass die Leiterplatte 3 während des Vergießens verkippen und die Bauteile 4 oder eine Leitung in Kontakt mit der Wandung kommen, ist dabei durch das Halteelement 5 verhindert. Mit seinem von der Leiterplatte 3 entfernten Ende steckt das Haltelement 5, das insbesondere massiv aus Stahl gefertigt ist, in einem Isolationselement 9, das wiederum seitlich in dem Gehäuse 7 gehalten wird. Insgesamt ist damit die Leiterplatte 3 zwischen dem Halteelement 5 und dem Sensorelement 2 fixiert und vorzugsweise auch verspannt, so dass jegliches Kippen vermieden werden kann. Die Verbindung zwischen dem Sensorelement 2 und der Leiterplatte 3 ist insbesondere über Lötkontakte oder Steckkontakte oder über entsprechende Adaptereinheiten realisiert. Insbesondere ergibt sich nach dem Vergießen eine in sich geschlossene Teileinheit, die entsprechend mit dem Sensorelement 2 verbunden bzw. kontaktiert werden kann. In anderen Ausgestaltungen ist das Halteelement aus einem Kunststoff hergestellt. Die Verbindung zur Übertragung von Signalen und elektrischer Energie zwischen der Messvorrichtung 2 und den umgebenden Gerätschaften erfolgt dabei insbesondere über die Steckerseele 14, die die elektrischen Kontakte, z. B. Drähte oder elektrischen Leitungen führt.

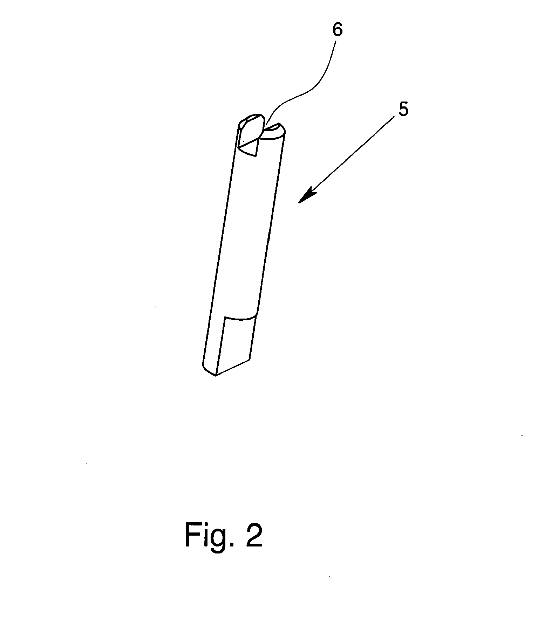

Das Halteelement 5 ist in der Fig. 2 dargestellt. Deutlich zu erkennen ist die Aussparung 6 in einem Ende, die die Leiterplatte 3 aufnimmt und festhält. Das andere Ende weist eine Abflachung auf, die der Einbringung in das Isolationselement 9 als Halterung des Halteelements 5 dient. Das Halteelement 5 ist dabei vorzugsweise aus einem stabilen Stahlzylinder gebildet.

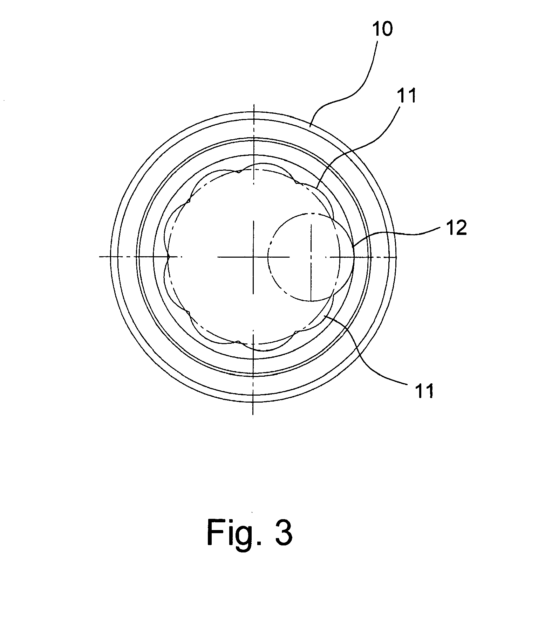

Das Sensorelement 2 wird von einer Hülse 10 umgeben, die in der gezeigten Ausgestaltung der Fig. 1 auch das dem Prozess zugewandte Ende der Messvorrichtung 1 bildet. Die Hülse 10 wird genauer dargestellt in den Abbildungen Fig. 3 bis Fig. 5.

Der Blick auf das dem Prozess zugewandte Ende der Hülse 10 der Fig. 3 zeigt die Vertiefungen 11, 12, die insgesamt eine Rosettenform ergeben. Zu erkennen ist weiterhin, dass eine Vertiefung 12 eine größere Querschnittsfläche umfasst als die anderen Vertiefungen 11. Durch diese größere Vertiefung 12 wird während der Fertigung der Messvorrichtung die Vergussmasse über eine Kanüle eingebracht und über die anderen Vertiefungen 11 kann die Luft entweichen. Gleichzeitig ruht die Platine im eingebauten Zustand an den Abschnitten der Innenwand der Hülse 10.

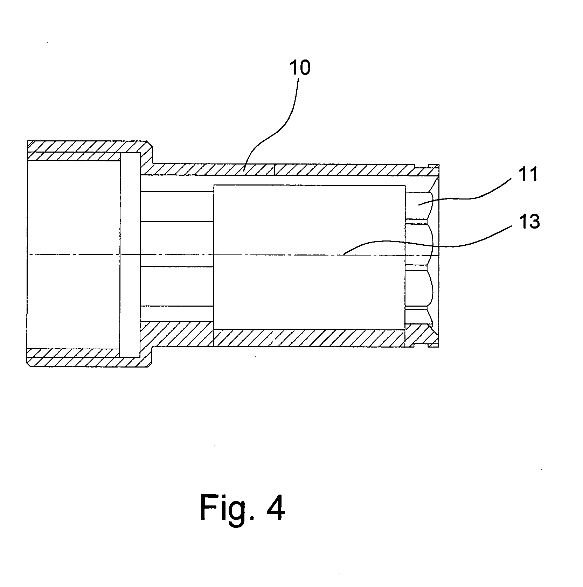

Die Fig. 4 zeigt im Schnitt die Innenwandung der Hülse 10. Die Vertiefungen 11 erstrecken sich nur über einen begrenzten Abschnitt längs der Längsachse 13 der Hülse 10 und münden dann in einer großflächigen Aussparung, an die sich wiederum weitere Vertiefungen in axialer Richtung anschließen. Zwischen den Vertiefungen 11 befinden sich Stege, die im verbauten Zustand Kontakt mit dem Sensorelement haben und dieses somit halten. Durch die Vertiefungen 11 ist es insbesondere möglich, die Hülse 10 auch von der dem Prozess zugewandten Seite aus zu vergießen. Dabei können insbesondere die Hülse 10, das Sensorelement 2 und ggf. auch die Leiterplatte 3 zu einer Komponente zusammengefasst werden, die bereits vergossen wird, und die dann mit den weiteren Komponenten und Elementen zu einer vollständigen Messvorrichtung zusammengesetzt wird. In einer alternativen Variante bilden zumindest die Hülse 10 und die Leiterplatte 3 nach dem Vergießen eine selbständige Einheit, die vorzugsweise über entsprechende Kontaktelemente, z. B. Stecker oder Leitungen nach außen verfügt, und die beim Zusammenbau des Messgerätes passend insbesondere mit der Sensoreinheit 2 zusammengeführt wird.

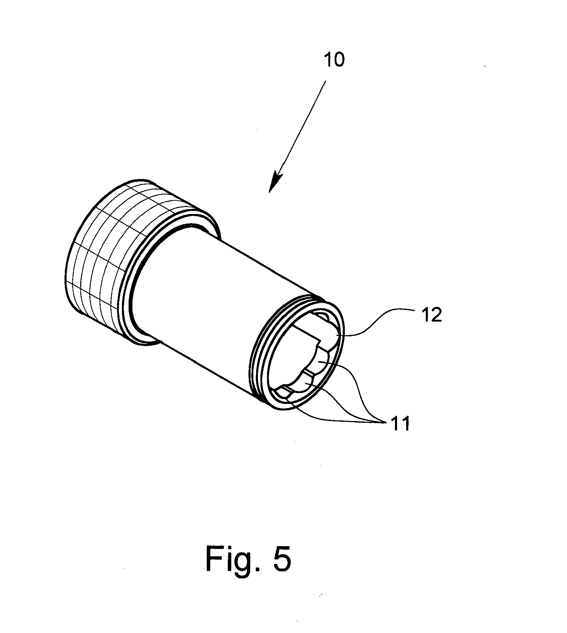

Die räumliche Darstellung der Fig. 5 der Hülse 10 zeigt noch einmal die deutlich größere Vertiefung 12 für das Einbringen der Vergussmasse im Gegensatz zu den kleineren Vertiefungen 11 für das Entweichen der Luft. Am hier unteren Ende ist die Rändelung der Hülse 10 zu erkennen, die die äußere Ausgestaltung der Messvorrichtung 1 teilweise ergibt. In einer alternativen - hier nicht dargestellten - Ausgestaltung sind zwei größere Vertiefungen 12 vorgesehen, um mehrere Möglichkeiten - ggf. für die gleichzeitige oder symmetrische - Einbringung einer Vergussmasse zu haben. Damit stellen sich dann insbesondere Vorteile bei der Automatisierung der Fertigung der Messvorrichtung ein.

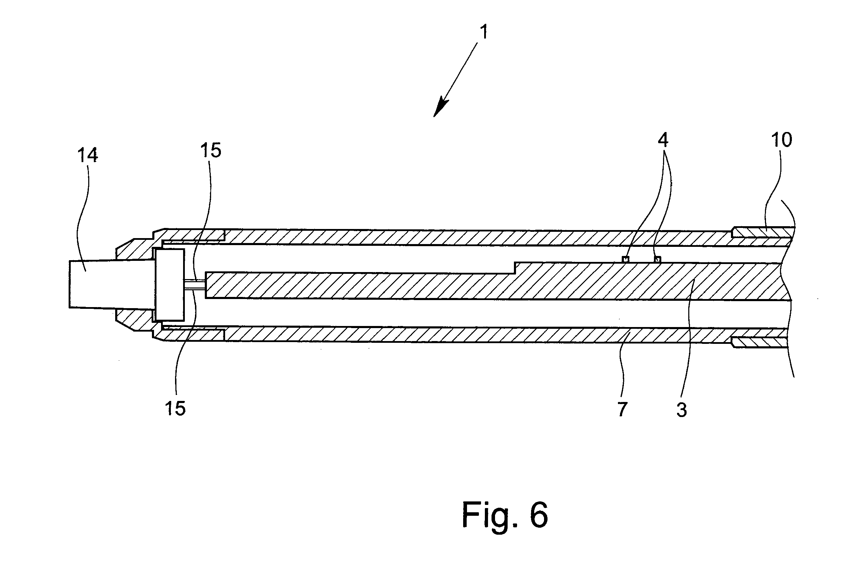

In der Fig. 6 ist eine Messvorrichtung 1 dargestellt, bei der die Leiterplatte 3 direkt mit der Steckerseele 14 der Messvorrichtung 1 verbunden ist. Dabei sind hier zwei Kontakte 15, die in der Seele 14 geführt sind, an die Leiterplatte 3 angelötet und fixieren damit die Leiterplatte 3 gegenüber einer Verkippung. Durch diese direkte Verbindung zwischen Leiterplatte 3 und Seele 14 über die Kontakte 15 kann daher auf das Halteelement 5 verzichtet werden.

## Patentansprüche

1. Messvorrichtung (1) zum Bestimmen mindestens einer Prozessgröße mit mindestens einem Sensorelement (2) zum Messen der Prozessgröße und mit mindestens einer das Sensorelement (2) zumindest teilweise umfassenden Hülse (10), wobei eine Innenwandung der Hülse (10) mindestens zwei Vertiefungen (11, 12) aufweist und wobei die Hülse (10) zumindest im Bereich der mindestens zwei Vertiefungen (11, 12) mindestens einen Raum umschließt,
**dadurch gekennzeichnet,**
**dass** die mindestens zwei Vertiefungen (11, 12) unterschiedliche Querschnittsflächen umgrenzen.

2. Messvorrichtung (1) nach Anspruch 1, **dadurch gekennzeichnet, dass** die mindestens zwei Vertiefungen (11, 12) teilkreisförmige Querschnittsflächen mit unterschiedlichen Radien umgrenzen.

3. Messvorrichtung (1) nach Anspruch 2, **dadurch gekennzeichnet, dass** mehrere Vertiefungen (11) teilkreisförmige Querschnittsflächen mit einem im Wesentlichen gleichen kleineren Radius umgrenzen und dass eine Vertiefung (12) eine teilkreisförmige Querschnittsfläche mit einem größeren Radius umgrenzt.

4. Messvorrichtung (1) nach einem der Ansprüche 1 bis 3, **dadurch gekennzeichnet, dass** die Hülse (10) zumindest teilweise im Wesentlichen rosettenfönnig ausgestaltet ist.

5. Messvorrichtung (1) nach einem der Ansprüche 1 bis 4, **dadurch gekennzeichnet, dass** die mindestens zwei Vertiefungen (11, 12) zumindest abschnittsweise axial im Wesentlichen parallel zu einer Längsachse (13) der Hülse (10) verlaufen.

6. Messvorrichtung (1) nach einem der Ansprüche 1 bis 5, **dadurch gekennzeichnet, dass** mindestens eine Leiterplatte (3) vorgesehen ist, dass mindestens ein im Wesentlichen als zylindrischer Stift ausgestaltetes Halteelement (5) vorgesehen ist, dass das Halteelement (5) an einem Ende eine Aussparung (6) zur Aufnahme eines Abschnitts der Leiterplatte (3) aufweist, und dass die Leiterplatte (3) zwischen dem Sensorelement (2) und dem Halteelement (5) fixiert ist.

7. Messvorrichtung (1) nach Anspruch 6, **dadurch gekennzeichnet, dass** mindestens ein Gehäuse (7) vorgesehen ist, das zumindest die Leiterplatte (3), das Halteelement (5) und das Sensorelement (2) zumindest teilweise umfasst und an der Innenwandung eine Metallisierung (8) für eine elektromagnetische Abschirmung aufweist.

8. Messvorrichtung (1) nach einem der Ansprüche 1 bis 7, **dadurch gekennzeichnet, dass** das Sensorelement (2) zum Messen des pH-Werts und/oder des Chlorgehalts und/oder des Sauerstoffgehalts und/oder der elektrischen Leitfähigkeit und/oder der Desinfektionsparameter und/oder der Trübung dient.

9. Messvorrichtung (1) insbesondere nach einem der Ansprüche 6 bis 8, **dadurch gekennzeichnet, dass** mindestens eine Steckerseele (14) vorgesehen ist, dass in der Steckerseele (14) mindestens ein Kontakt (15) geführt ist und dass der mindestens eine Kontakt (15) mit einer vom Sensorelement (2) abgewandten Seite der Leiterplatte (3) - insbesondere fixierend - in Kontakt steht.
